# EUROPÄISCHE PATENTANMELDUNG

(11) **EP 1 929 910 A2**
(43) Veröffentlichungstag der Anmeldung: **11.06.2008**
(21) Anmeldenummer: 07010294.2
(22) Anmeldetag: 23.05.2007
(51) Int. Cl.: A47J 43/28

(54) **Weisswurstheber**

(30) Priorität: 23.10.2006 DE 102006049861
(71) Anmelder: Metallwarenfabrik Marktoberdorf GmbH & Co. KG, 87616 Marktoberdorf (DE)
(72) Erfinder: Fridrich, Michael D., 87616 Marktoberdorf (DE)
(74) Vertreter: Tiesmeyer, Johannes

(57) **Zusammenfassung**

Ein Wurstheber (10), insbesondere zum Servieren von Weißwürsten, umfasst einen Stiel (12) und eine daran angeordnete längliche Wurstaufnahmemulde (14).

## Beschreibung

Die vorliegende Erfindung betrifft einen Wurstheber, insbesondere zum Servieren von Weißwürsten.

Weißwürste sind eine regionale Spezialität in Bayern und es war bisher noch nicht möglich, diese besondere regionale Spezialität auch schon beim Servieren als besondere Wurstspezialität, die sich eindeutig von anderen Würsten unterscheidet, herauszustellen. Um die Weißwürste aus dem Wasser zu heben, in dem sie erwärmt bzw. serviert werden, werden bisher alle möglichen Serviergeräte, wie beispielsweise Zangen oder einfach Gabeln verwendet, und es besteht daher das Bedürfnis, die besondere regionale Spezialität der Weißwurst auch angemessen servieren zu können.

Zur Lösung dieser Aufgabe stellt die vorliegende Erfindung einen Wurstheber, insbesondere zum Servieren von Weißwürsten bereit, der durch einen Stiel und eine daran angeordnete längliche Wurstaufnahmemulde gekennzeichnet ist. Ein derartiger Wurstheber erfüllt das Bedürfnis, Weißwürste mit einem speziell für diese vorgesehenen, besonderen, und vor allem auch optisch ansprechenden Serviergerät servieren zu können, ohne auf die optisch wenig attraktive Notlösung irgendwelcher Zangen oder Gabeln ausweichen zu müssen. Weiterhin ermöglicht die längliche Wurstaufnahmemulde ein sicheres Abstützen und Anheben einer darin liegenden Weißwurst, wobei, wenn die Weißwürste paarweise zusammenhängend vorgesehen sind, die in der länglichen Wurstaufnahmemulde liegende Weißwurst so stabil abgestützt wird, dass eine zweite, an dieser ersten Weißwurst hängende Weißwurst ebenfalls von dem Wurstheber mit aus dem Wasser gehoben wird.

Bei einer bevorzugten Ausführungsform der vorliegenden Erfindung ist in der Wurstaufnahmemulde ein in deren Längsrichtung der Länge nach ausgerichtetes Langloch vorgesehen. Durch ein derartiges Langloch kann an der Weißwurst anhaftendes Wasser einfach abtropfen, so dass die Weißwurst trocken serviert und auf einen Teller abgelegt werden kann.

Hierbei ist besonders bevorzugt, dass die Kontur des Langlochs der Kontur einer Weißwurst ähnelt, so dass der Wurstheber durch diese Formgebung auf den ersten Blick als Wurstheber zum Servieren von Weißwürsten erkennbar ist und als Serviergerät für Weißwürste optisch besonders ansprechend ist, da er somit in seiner Gestaltung an die Weißwurst angepasst ist. Vorzugsweise hat auch die Wurstaufnahmemulde eine Kontur, die der einer üblichen Weißwurst ähnelt.

Bei einer alternativen Ausführungsform können mehrere Löcher in der Wurstaufnahmemulde vorgesehen sein. Auch bei dieser Ausführungsform ist gewährleistet, dass an der Weißwurst anhaftendes Wasser durch die Löcher in der Wurstaufnahmemulde ablaufen kann und die Weißwurst somit trocken auf einem Teller serviert werden kann.

Es wird besonders bevorzugt, dass der Stiel des Wursthebers in der Nähe eines der Längsenden der Wurstaufnahmemulde mit dieser verbunden ist. Hierdurch wird sichergestellt, dass der Stiel beim Aufnehmen einer Weißwurst in die Wurstaufnahmemulde nicht im Weg ist, sondern die Wurstaufnahmemulde möglichst einfach unter eine Weißwurst bewegt werden kann, und weiterhin hat die Anordnung des Stiels in der Nähe eines der Längsenden der Wurstaufnahmemulde, vorzugsweise an einem Übergang einer langen Seite der Wurstaufnahmemulde zu einer schmalen Seite der Wurstaufnahmemulde, auch den Vorteil, einen optisch ansprechenderen Wurstheber bereitzustellen. Es kann eine Linkshändervariante und eine Rechtshändervariante durch betreffende Anordnung des Stiels an der Wurstaufnahmemulde realisiert werden.

Um eine Wurst besonders sicher in der Wurstaufnahmemulde aufnehmen zu können, wird bevorzugt, dass die Wurstaufnahmemulde innen sowohl in Längsrichtung als auch in Querrichtung konkav gekrümmt ist und somit besonders gut an die Außenkontur einer Wurst, insbesondere-einer Weißwurst, angepasst ist.

Eine Variante des Wursthebers weist den Stiel mittig an einer Längsseite der Wurstaufnahmemulde auf. Eine andere Variante weist den Stiel mittig an einer Schmalseite der Wurstaufnahmemulde auf.

Vorzugsweise ist der erfindungsgemäße Wurstheber aus Metall, insbesondere aus Edelstahl gefertigt. Er kann auch aus verschiedenen Materialien bestehen, z. B. aus einem Kunststoff im Bereich seiner Wurstaufnahmemulde und aus Stahl im Bereich des Stiels. Auch mit einem Kunststoff überzogenes Metall kommt als Material des Wursthebers in Frage.

Bei dem erfindungsgemäßen Wurstheber weist die Wurstaufnahmemulde vorzugsweise eine Länge im Bereich von 100 mm bis 150 mm, besonders bevorzugt im Bereich von 100 mm bis 130 mm auf, um sicherzustellen, dass die Wurstaufnahmemulde eine an eine übliche Weißwurst angepasste Längenabmessung hat, bei der die Weißwurst vorzugsweise an beiden Enden der Wurstaufnahmemulde etwas über diese hinausragen kann, aber trotzdem in der Wurstaufnahmemulde sicher gehalten ist.

Weiterhin ist bei einem erfindungsgemäßen Wurstheber bevorzugt, dass die Wurstaufnahmemulde eine Breite im Bereich von 30 mm bis 60 mm hat, um eine übliche Weißwurst sicher abstützen zu können. Mit den genannten Abmessungen kann der Wurstheber mit seiner Mulde ohne Weiteres in einen üblichen Weißwurstserviertopf eingebracht werden.

Bei einer weiteren Ausführungsform des erfindungsgemäßen Wursthebers kann vorgesehen sein, dass am äußeren Randbereich der Wurstaufnahmemulde eine Klemmvorrichtung zum Positionieren des Verbindungsstrangs zweier miteinander verbundener Würste in einer Position zum Durchtrennen des Verbindungsstrangs vorgesehen ist. Eine derartige Klemmvorrichtung hat den Vorteil, dass der Verbindungsstrang, der zwei Würste miteinander verbindet, sicher eingeklemmt werden kann, und somit einfach mittels einer Schere oder einem Messer abgeschnitten werden kann, so dass die Würste einzeln serviert werden können.

Hierbei wird besonders bevorzugt, dass die Klemmvorrichtung eine Einkerbung im äußeren Rand der Wurstaufnahmemulde umfasst. Eine derartige Einkerbung stellt eine besonders einfach herzustellende Klemmvorrichtung dar, von der bei Gebrauch keine Verletzungsgefahr ausgeht, da keinerlei scharfkantige Teile von der Wurstaufnahmemulde nach außen hervorstehen.

Die vorliegende Erfindung wird nachstehend unter Bezugnahme auf die beigefügten Zeichnungen anhand einer besonders bevorzugten Ausführungsform exemplarisch beschrieben, wobei:
- Fig. 1: eine perspektivische Ansicht eines erfindungsgemäßen Wursthebers von vorne ist,
- Fig. 2: eine perspektivische Ansicht eines erfindungsgemäßen Wursthebers von schräg unten ist,
- Fig. 3: eine weitere perspektivische Ansicht eines erfindungsgemäßen Wursthebers von vorne ist,
- Fig. 4: eine Seitenansicht eines erfindungsgemäßen Wursthebers ist,
- Fig. 5: eine Ansicht eines erfindungsgemäßen Wursthebers von oben ist,
- Fig. 6: eine Ansicht einer modifizierten Ausführungsform des erfindungsgemäßen Wursthebers von oben ist und
- Fig. 7: eine Detailansicht einer weiteren Abänderung des Wursthebers von Fig. 6 ist.

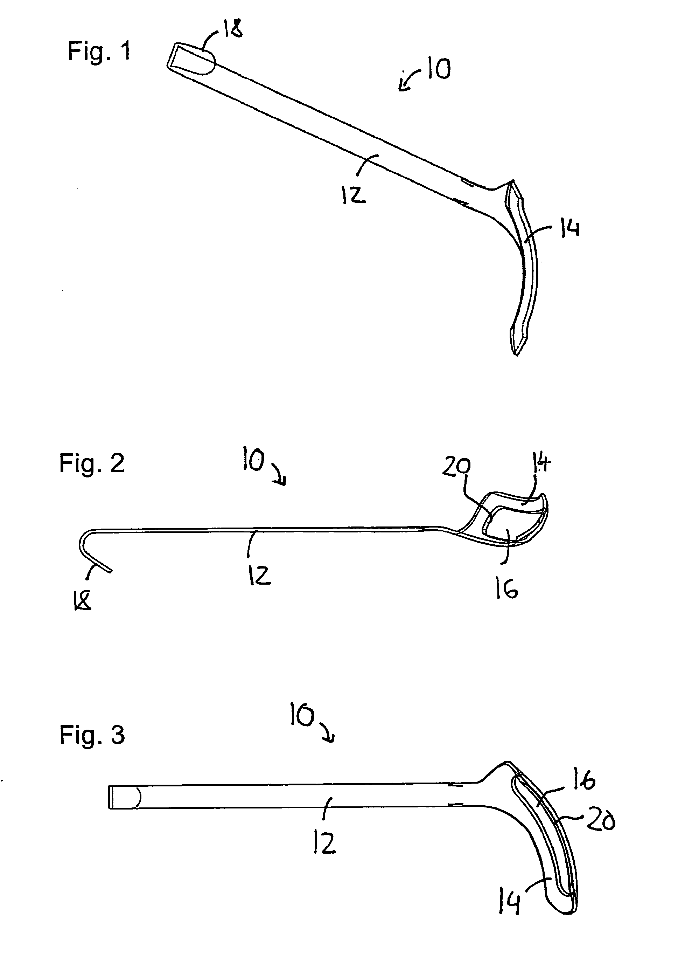

Ein Wurstheber 10 weist, wie in Fig. 1-5 gezeigt, einen Stiel 12 und eine Wurstaufnahmemulde 14 auf, welche derart miteinander verbunden sind, dass der Stiel 12 in einem Übergangsbereich zwischen einer Längsseite und einer Schmalseite der Wurstaufnahmemulde 14 einstückig angeformt ist. In der Wurstaufnahmemulde 14 ist ein Langloch 16 vorgesehen.

An dem von der Wurstaufnahmemulde 14 entfernten Ende des Stiels 12 ist bei der in den Fig. 1-5 dargestellten Ausführungsform des erfindungsgemäßen Wursthebers ein Haken 18 vorgesehen. Statt des Hakens 18 könnte auch eine Öse zum Aufhängen des Wursthebers vorgesehen sein, oder der Stiel 12 könnte ein glattes Ende ohne jegliche daran angebrachte Aufhängungsvorrichtungen aufweisen.

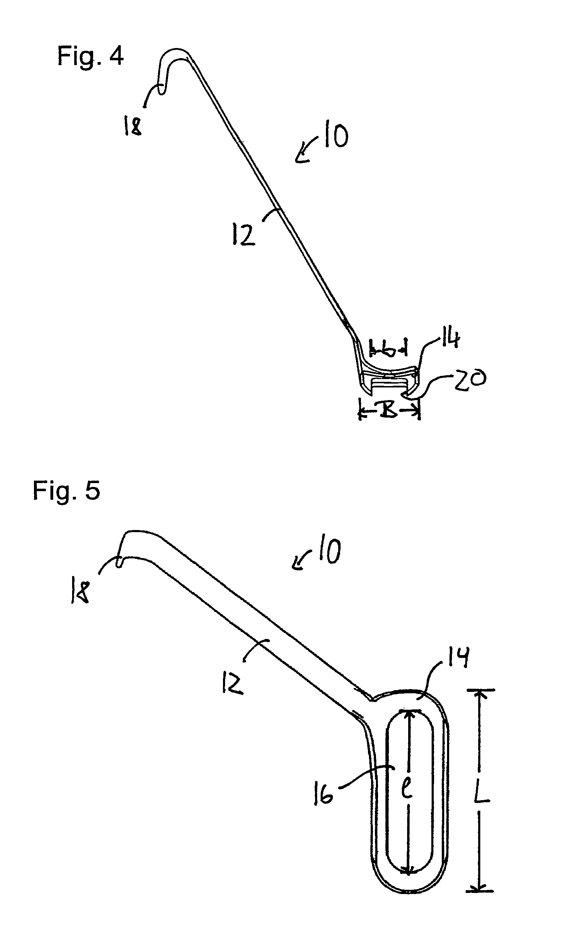

Das Langloch 16 ist, wie insbesondere aus Fig. 5 ersichtlich, entlang der Längsrichtung der länglichen Wurstaufnahmemulde 14 ausgerichtet, und die Kontur des Langlochs 16 ähnelt, wie auch die Randkontur der Wurstaufnahmemulde 14, der Kontur einer Weißwurst. Das Langloch 16 ist so bemessen, dass seine Länge und seine Breite jeweils kleiner sind als die Länge und Breite einer üblichen Weißwurst.

Die längliche Wurstaufnahmemulde 14 ist, wie insbesondere aus Fig. 1-3 ersichtlich, innen sowohl in Längsrichtung als auch in Querrichtung konkav gekrümmt, so dass eine im Wesentlichen zylinderförmige, gekrümmte Weißwurst sich in diese konkav gekrümmte Wurstaufnahmemulde hineinlegen kann und darin so sicher gehalten ist, dass sie beim Herausheben der Weißwurst auf dem Wasser, in dem sie erwärmt worden ist, nicht aus der Wurstaufnahmemulde 14 herausfallen kann. Sollte eine zweite Weißwurst mit der ersten, in der Wurstaufnahmemulde 14 liegenden Weißwurst verbunden sein, so wird auch diese aus dem Wasser, in dem die Weißwürste erwärmt worden sind, herausgehoben, da die erste Weißwurst so stabil in der Wurstaufnahmemulde 14 liegt, dass auch eine weitere, daran hängende Weißwurst die erste Weißwurst nicht aus der Wurstaufnahmemulde herauszieht.

Das Langloch 16 dient hierbei einerseits als Ablauföffnung für an der Weißwurst anhaftendes Wasser, so dass die Weißwurst trocken auf einen Teller abgelegt werden kann, und hat andererseits den zusätzlichen Vorteil, dass, wie aus Fig. 4 ersichtlich, durch das Vorsehen des Langlochs 16 die Innenkante 20 der Wurstaufnahmemulde 14, die das Langloch 16 begrenzt, eine derartige Form aufweist, dass eine Weißwurst, die in der Wurstaufnahmemulde 14 liegt, sich derart verformen kann, dass sie etwas nach unten durch das Langloch 16 hervorsteht und dabei von der Innenkante 20 der Wurstaufnahmemulde 14 festgeklemmt wird, um eine besonders sichere Abstützung der Weißwurst in der Wurstaufnahmemulde 14 bereitzustellen. Diese Klemmverbindung zwischen der Weißwurst und der Innenkante 20 der Wurstaufnahmemulde 14 ist hierbei jedoch nicht so fest, dass die Weißwurst nicht einfach durch ein Verschwenken der Wurstaufnahmemulde 14 von einer im Wesentlichen horizontalen Stellung in eine im Wesentlichen senkrechte Stellung auf der Wurstaufnahmemulde 14 herausrutschen könnte, um die Weißwurst, ohne ein zusätzliches Serviergerät zu Hilfe nehmen zu müssen, auf einem Teller abzulegen.

Die in den Fig. 1-5 dargestellte Ausführungsform eines Wursthebers ist aus Edelstahl hergestellt und hierbei weist die Wurstaufnahmemulde vorzugsweise eine Außenlänge L von etwa 120 mm auf, wobei das Langloch 16 eine Länge I von etwa 95 mm aufweist. Die Breite B der Wurstaufnahmemulde 14 der in den Fig. 1 - 5 dargestellten Ausführungsform der Erfindung beträgt etwa 40 mm und die Breite b des Langlochs 16 beträgt bei der dargestellten Ausführungsform etwa 25 mm. Durch diese Abmessungen wird sichergestellt, dass eine übliche Weißwurst in der Wurstaufnahmemulde sicher gehalten ist, ohne dass sie vollständig durch das Langloch 16 fallen könnte, wobei die untere Fläche der in der Wurstaufnahmemulde 14 liegenden Weißwurst immer noch leicht durch das Langloch 16 nach unten von dem Wurstheber hervorstehen kann, so dass eine leichte Klemmwirkung der Weißwurst an der Innenkante 20 der Wurstaufnahmemulde 14 bereitgestellt wird, durch die die Weißwurst besonders sicher in der Wurstaufnahmemulde 14 gehalten wird.

Die Länge und Winkelung des Stiels 12 ist vorzugsweise derart angepasst, dass der erfindungsgemäße Wurstheber 10 bequem auch in tiefe Töpfe eingetaucht werden kann und mit möglichst wenig Aufwand so gehalten werden kann, dass die Wurstaufnahmemulde, wie in der in Fig. 4 dargestellten Stellung, möglichst waagerecht ausgerichtet ist, so dass eine in der Wurstaufnahmemulde 14 befindliche Weißwurst besonders sicher gehalten wird.

Die Anordnung des Stiels 12 ist hierbei nicht auf die in den Figuren gezeigte Position im Übergangsbereich von einer Schmalseite zu einer Längsseite der Wurstaufnahmemulde 14 beschränkt, sondern kann an jeder geeigneten Stelle der Wurstaufnahmemulde 14 angeordnet sein. Für einen Weißwurstheber, der von Linkshändern und Rechtshändern gleichermaßen gut zu bedienen ist, ist es vorteilhaft, den Stiel 12 im Wesentlichen in der Mitte einer Längsseite der Wurstaufnahmemulde 14 anzuordnen.

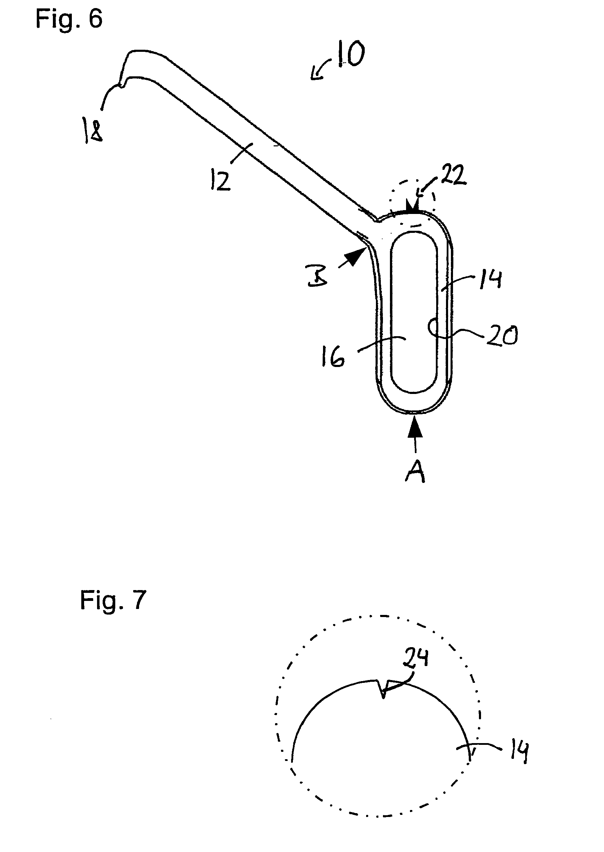

Fig. 6 zeigt eine modifizierte Ausführungsform des erfindungsgemäßen Wursthebers 10. Diese modifizierte Ausführungsform unterscheidet sich von der in den Fig. 1-5 dargestellten Ausführungsform lediglich darin, dass an einer Schmalseite der Wurstaufnahmemulde 14 eine Klemmvorrichtung 22 oder Positioniervorrichtung angeordnet ist, in die beispielsweise ein Verbindungsstrang, der zwei Weißwürste miteinander verbindet, klemmend positioniert werden kann, so dass dieser entweder selbsttätig von in der Klemmvorrichtung 22 angeordneten Schneidkanten abgeschnitten wird oder durch den Benutzer mit einer Schere oder einem Messer einfach zerschnitten werden kann, während er in der Klemmvorrichtung 22 fixiert ist. Die Klemmvorrichtung 22 muss nicht an der in Fig. 6 dargestellten Stelle angebracht sein, sondern kann alternativ auch an einer anderen Position im Bereich der Wurstaufnahmemulde 14 angebracht sein. Die mit A und B markierten Pfeile in Fig. 6 zeigen zwei weitere mögliche Positionen für die Anordnung der Klemmvorrichtung 22

Die Detailansicht von Fig. 7 zeigt eine besonders bevorzugte Ausgestaltungsform der Klemmvorrichtung 22 als- eine Einkerbung 24 im äußeren Rand der Wurstaufnahmemulde 14. Auch diese Einkerbung 24 kann grundsätzlich an einer beliebigen Position im Bereich der Wurstaufnahmemulde 14 angeordnet sein; für ein einfaches Einklemmen eines Verbindungsstrangs zwischen zwei Weißwürsten ist allerdings bevorzugt, dass die Einkerbung 24 in der Nähe eines der Längsenden der Wurstaufnahmemulde 14 angeordnet ist.

## Patentansprüche

1. Wurstheber (10), insbesondere zum Servieren von Weißwürsten, **gekennzeichnet durch** einen Stiel (12) und eine daran angeordnete längliche Wurstaufnahmemulde (14).

2. Wurstheber (10) nach Anspruch 1, **dadurch gekennzeichnet, dass** in der Wurstaufnahmemulde (14) ein in deren Längsrichtung der Länge nach ausgerichtetes Langloch (16) vorgesehen ist.

3. Wurstheber (10) nach Anspruch 2, **dadurch gekennzeichnet, dass** die Kontur des Langlochs (16) der Kontur einer Weißwurst ähnelt.

4. Wurstheber (10) nach Anspruch 1, **gekennzeichnet durch** mehrere Löcher in der Wurstaufnahmemulde (14).

5. Wurstheber (10) nach einem der vorhergehenden Ansprüche, **dadurch gekennzeichnet, dass** der Stiel (12) in der Nähe eines der Längsenden der Wurstaufnahmemulde (14) mit dieser verbunden ist.

6. Wurstheber (10) nach einem der vorhergehenden Ansprüche, **dadurch gekennzeichnet, dass** die Wurstaufnahmemulde (14) innen sowohl in Längsrichtung als auch in Querrichtung konkav gekrümmt ist.

7. Wurstheber (10) nach einem der vorhergehenden Ansprüche, **dadurch gekennzeichnet, dass** er aus Metall, insbesondere Edelstahl, gefertigt ist.

8. Wurstheber (10) nach einem der vorhergehenden Ansprüche, **dadurch gekennzeichnet, dass** die Wurstaufnahmemulde (14) eine Länge (L) im Bereich von 100 mm bis 150 mm, vorzugsweise im Bereich von 100 mm bis 130 mm hat.

9. Wurstheber (10) nach einem der vorhergehenden Ansprüche, **dadurch gekennzeichnet, dass** die Wurstaufnahmemulde (14) eine Breite (B) im Bereich von 30 mm bis 60 mm hat.

10. Wurstheber (10) nach einem der vorhergehenden Ansprüche, **dadurch gekennzeichnet, dass** am äußeren Randbereich der Wurstaufnahmemulde (14) eine Klemmvorrichtung (22) zum Positionieren des Verbindungsstrangs zweier miteinander verbundener Würste in einer Position zum Durchtrennen des Verbindungsstranges vorgesehen ist.

11. Wurstheber (10) nach Anspruch 10, **dadurch gekennzeichnet, dass** die Klemmvorrichtung (22) eine Einkerbung (24) im äußeren Rand der Wurstaufnahmemulde (14) umfasst.
